# EUROPEAN PATENT SPECIFICATION

(11) **EP 4 199 773 B1**
(45) Date of publication and mention of the grant of the patent: **04.11.2026**
(21) Application number: 21859282.2
(22) Date of filing: 23.08.2021
(51) Int. Cl.: A41G 5/02, A45D 40/30, C09J 7/20

(54) **READY-TO-USE EYELASH EXTENSIONS**
GEBRAUCHSFERTIGE WIMPERNVERLÄNGERUNGEN
EXTENSIONS DE CILS PRÊTES À L'EMPLOI

(30) Priority: 21.08.2020 US 202063068728 P
(43) Date of publication of application: 28.06.2023
(73) Proprietor: Kiss Nail Products, Inc., Port Washington, NY 11050 (US)
(72) Inventor: AHN, Kichul, Washington, New York 11050 (US); KIM, Jieun, Washington, New York 11050 (US); BANG, Jane, Washington, New York 11050 (US)
(74) Representative: Cameron Intellectual Property Ltd
(86) International application number: PCT/US2021/047200
(87) International publication number: WO 2022/040640

(56) References cited:
- US-A1- 2002 056 465
- US-A1- 2009 235 950
- US-A1- 2010 043 816
- US-A1- 2018 242 671
- US-A1- 2018 352 885
- US-A1- 2019 183 200

## Description

### BACKGROUND

### Field of Disclosure

The field of the disclosure is an eyelash extension system and more particularly artificial lashes having a pre-applied adhesive element.

### Background

Artificial eyelashes are popular products that are used to improve the look of a user's lash line through the addition of lash length and/or volume. Such artificial eyelashes typically comprise a lash line strip with eyelash filaments extending from there. The eyelash filaments can be made from mink, synthetic materials, horsehair, and in some instances, human hair. Artificial eyelashes are typically applied by spreading adhesive on or around the lash line strip component of a lash extension and pressing the lash line strip to a user's lash line or proximate thereto. Such eyelash extensions can be difficult to apply and require that a user have access to both the extensions and specialized adhesives.

More recently, do-it-yourself, under-lash eyelash extension systems have been developed. In these systems, a strip of eyelash extensions is glued to the underside of a user's natural eyelashes in a similar fashion to more traditional above-lash extension systems. The do-it-yourself systems often come in small sections (e.g., wisp lashes, cluster lashes, individual lashes), allowing for an inexperienced user to apply the eyelash extensions without the difficulty of aligning a longer, single strip of eyelash extensions. However, these do-it-yourself systems still require the user to have and apply specialty adhesive either to their lashes or to the lash extension system before use.

A need exists in the art for eyelash extension systems that eliminate the difficulties of prior art systems. A need also exists for a means that easily facilitates a user to apply eyelash extensions without the drawbacks of existing systems.

US20180242671A1 discloses an artificial eyelash extension system according to the preamble of claim 1. US20020056465A1 discloses artificial eyelashes. US20180352885A1 discloses triple layered eyelashes. US20090235950A1 discloses eyelash extensions and method for applying eyelash extensions. US20100043816A1 discloses a medical double-sided false eyelash tape apparatus and method. US20190183200A1 discloses a self-adhesive false eyelash.

### SUMMARY

An object of the disclosure is to create eyelash extensions that overcome many of the drawbacks in the prior art. A feature of the disclosure is that the eyelash extensions have pre-applied adhesive elements before being packaged for sale to a user. An advantage of the disclosure is that the eyelash extension system is ready to use without the need for any additional supplies such as glue. An additional advantage of the disclosure is that the user can apply the invented eyelash extension system quickly and with one hand.

A further object of the disclosure is to provide a ready-to-use eyelash extension system having a pre-applied adhesive that is easy for a user to apply. A feature of the disclosure, not forming part of the claimed invention, is that the pre-applied adhesive is droplets of adhesive applied to the eyelash filaments of the eyelash extension system. Alternatively, the disclosure features double-sided tape as the pre-applied adhesive. An advantage of the disclosure is that users can apply the invented lash extension system without modifying the pre-applied adhesive.

Another object of the disclosure is to maintain a ready-to-use eyelash extension system in usable condition before use. A feature of the disclosure is the use of temporary overlayment of a pre-applied adhesive element that is removed before the use of the eyelash extension system. An advantage of the disclosure is that the pre-applied adhesive elements of the eyelash extension system are maintained in clean condition for use by a user.

Yet another object of the disclosure is to provide a lash extension system that is easily applied by a user onto their natural lashes. A feature of the disclosure is that the lash extension system adheres directly to the natural lashes of a user at a position not directly adjacent to the eyelid of a user. An advantage of the disclosure is that by adhering the lash extension system to the lashes of a user in a position spaced from the eyelid, the user avoids any pain and skin irritation associated with lash systems that are applied to the skin of the eyelid or adjacent thereto.

In an aspect of the present invention, there is provided an artificial eyelash extension system according to claim 1.

The disclosure provides an artificial eyelash extension system comprising a plurality of eyelash filaments, each having a base and a tip; a support strip attached to the bases of the eyelash filaments, an adhesive element applied to the plurality of the eyelash filaments before the artificial extension system is packaged for sale to a user.

Also provided is a method for applying artificial eyelash extensions, not forming part of the claimed invention, comprising providing to a user an eyelash extension system already having an adhesive element disposed on the eyelash extension system before being packaged for sale to the user, moving the adhesive element of the eyelash extension system into contact with the user's natural eyelashes.

### BRIEF DESCRIPTION OF THE DRAWINGS

The disclosure, together with the above and other objects and advantages, will be best understood from the following detailed description of the preferred embodiment of the disclosure shown in the accompanying drawings, wherein:
FIG. 1A depicts a perspective view of an eyelash extension system having pre-applied adhesive elements, not forming part of the claimed invention;
FIG. 1B depicts a perspective view of an embodiment of an eyelash extension system having pre-applied adhesive elements in accordance with the features of the invention;
FIG. 1C depicts a perspective view of an alternative embodiment of an eyelash extension system not forming part of the claimed invention, having pre-applied adhesive elements in accordance with the features of the disclosure;
FIG. 1D depicts a perspective view an embodiment of an eyelash extension system not forming part of the claimed invention, having pre-applied adhesive elements overlaid by a temporary backing in accordance with the features of the disclosure;
FIG. 2A depicts a perspective view of an embodiment, not forming part of the claimed invention, of an eyelash extension system having an alternative pre-applied adhesive element in accordance with the features of the disclosure;
FIG. 2B depicts a perspective view of the disclosure embodiment, not forming part of the claimed invention, shown in FIG. 2A featuring a temporary overlayment of the adhesive elements in accordance with the features of the disclosure;
FIG. 2C depicts a perspective view of the disclosure embodiment shown in FIG. 2B featuring an alternative embodiment, not forming part of the claimed invention, of temporary overlayment of the adhesive elements, in accordance with the features of the disclosure;
FIG. 3A depicts a schematic of using the eyelash extension system depicted in FIG. 1A in accordance with the features of the disclosure; and
FIG. 3B depicts a schematic of using the eyelash extension system depicted in FIG. 2A in accordance with the features of the disclosure.

### DETAILED DESCRIPTION

In various embodiments, the disclosure provides a ready-to-apply eyelash extension system. The eyelash extension system comprises eyelash filaments extending from an eyelash support strip wherein the filaments feature adhesive elements for attachment to the natural eyelashes of a user. The eyelash extension system may be referred to as a lash extension system or an artificial eyelash extension system.

The foregoing summary, as well as the following detailed description of certain embodiments of the present disclosure, will be better understood when read in conjunction with the appended drawings.

As used herein, an element or step recited in the singular and proceeded with the word "a" or "an" should be understood as not excluding plural said elements or steps, unless such exclusion is explicitly stated. Furthermore, references to "one embodiment" of the present disclosure are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

The phrases "lash," "artificial eyelash," and "eyelash," as used herein, are interchangeable and refer to an apparatus that is not part of the wearer's body unless specifically indicated otherwise (e.g., phrases such as "natural eyelash" or "user's eyelash" refer to a part of the wearer's body).

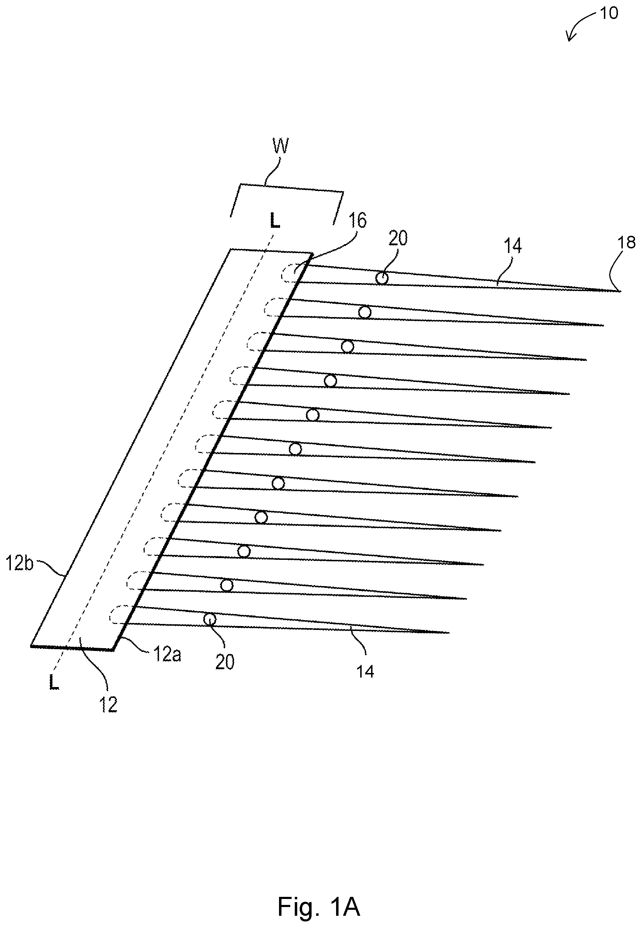

Turning to the figures, FIG. 1A depicts a perspective view of one embodiment 10 of a non-claimed lash extension system. The lash extension system may include a plurality of artificial eyelash filaments, a support strip, and an adhesive element. The lash extension system comprises a support strip 12 having a length L and width W. (The width W is a representation and not drawn to scale and may be narrower.) The support strip 12 may be attached to the bases of the eyelash filaments. The support strip 12 has a leading edge from which eyelash filaments 14 extend. The width W of the support strip 12 extends between the proximal edge 12a and the distal edge 12b of the support strip 12. As shown in FIG. 1A, the eyelash extension system 10 features eyelash filaments 14 extending between a base 16 and a tip 18. The bases 16 of the eyelash filaments 14 are embedded within and/or adhered to the support strip 12. In the exemplary embodiment shown in FIG. 1A, the bases 16 of the eyelash filaments 14 are spaced apart, with the eyelash filaments 14 extending away from the support strip 12 such that the lengths of the eyelash filaments 14 are substantially parallel and extending in a direction that is substantially perpendicular to the length L of the support strip 12.

While in FIG. 1A, the width W of the support strip 12 is about ten percent of the length of the filaments 14; in other embodiments, the width W of the support strip 12 is much smaller than the eyelash filaments 14. For example, in some embodiments, the width W is less than five percent of the length of the eyelash filaments 14. The larger width W is shown only for illustration purposes and to be able to show the structure of the support strip 12.

As can be appreciated from FIG. 1A, the eyelash filaments 14 have a variable length and arrangement. Some eyelash filaments 14 are substantially parallel, while other eyelash filaments 14 cross each other. The eyelash filaments 14 will have an average length resulting in a desired overall appearance of length of the eyelashes after application, in one embodiment.

The eyelash filaments 14 are made from conventional materials used in eyelash extensions. Suitable materials include materials having an appearance similar to human eyelashes. Exemplary materials include mink, horsehair, human hair, synthetic materials, and combinations thereof.

Materials used in the support strip 12 are well known in the art and include any suitable material for the attaching of the bases of eyelash filaments 14. Exemplary materials include PBT, nylon, cotton, silk, and combinations thereof.

A salient feature of the lash extension system 10 is the inclusion of an adhesive element 20 disposed on the eyelash filaments 14. The adhesive element 20 may be applied before the artificial eyelash extension system is packaged for sale to a user, to the plurality of the eyelash filaments. The adhesive element 20 may be applied at a position between the support strip and one-half the eyelash filaments' average length away from the support strip. The adhesive element 20 may be applied continuously to a predetermined location that is less than half of the eyelash filaments' average length away from the support strip. At least some of the adhesive element 20 is applied to the eyelash filaments 14 at the time of manufacturing of the system. FIG. 1A shows the adhesive element 20 disposed on each eyelash filament 14. The depiction of the location of the adhesive element 20 is meant to be exemplary and non-limiting. In several figures, the adhesive element 20 is shown as discrete droplets of adhesive. However, that depiction should not be limiting. In FIG. 1A, all eyelash filaments 14 are shown with an applied adhesive element 20. In some embodiments, not all eyelash filaments 14 will receive adhesive. In one embodiment, between one-half and three-fourths of all eyelash filaments comprising the artificial eyelash extension system receive the adhesive element. In other embodiments, the plurality of eyelash filaments comprises multiple layers, and only one layer of eyelash filaments receives the adhesive.

A benefit of the adhesive element 20 is that the lash extension system is ready to use without applying external adhesive, as will be described below.

While the figures depict the lash extension system as being used in conjunction with a full-strip artificial eyelash extension system, the same ready-to-use adhesive concepts may be used in conjunction with artificial eyelash extension systems of various styles, lengths, and sizes, such as smaller "wisp" eyelash systems (e.g., KISS Falscara Eyelash made by Kiss Products, Inc. located in Port Washington, NY) that are segmented versions of a full-strip eyelash systems and whose support strip lengths are one-half to one-fifth of a full-strip eyelash extension system's support strip length, or even smaller "cluster" eyelash systems (e.g., KISS Lash Couture LuXtensions, also made by Kiss Products, Inc.), or the smallest "flare" or "individual" eyelash systems (e.g., KISS i•ENVY Ultra Black Flare Short/Medium/Long, KISS i•ENVY Ultra Black 3D Individual Lash Medium/Long, all of which are also made by Kiss Products, Inc.) that may include only a few eyelash filaments 14 attached together at their bases.

The adhesive element 20 can be disposed on a plurality of eyelash filaments 14 across the entire length L of the support strip 12 or some fraction of the eyelash filaments 14, such as two-thirds, one-half, or one-third. It will be apparent to one having ordinary skill in the art that the fraction of eyelash filaments 14 having the adhesive elements disposed thereon can be adjusted according to the weight of the section of lash extension system 10 being used. For example, a lash extension system 10 designed for application to all of a user's natural lashes may require that all the eyelash filaments 14 have corresponding adhesive elements. Alternatively, a lash extension system 10 designed for attachment to some lesser portion of a user's natural lashes may only require that one half or a smaller proportion of eyelash filaments 14 bear corresponding adhesive elements.

As depicted in FIG. 1A, the adhesive element 20 can be discrete applications or droplets of an adhesive. The adhesive element 20 may be comprised of multiple discrete droplets of adhesive. The adhesive element 20 may be applied to an upward-facing surface of the eyelash filaments. In an embodiment, the adhesive element 20 is disposed at approximately the same position along the length of each eyelash filaments 14 away from the support strip 12. FIG. 1A shows the adhesive element 20 as small, flat sections of adhesive overlaying a portion of the eyelash filaments 14. In alternative embodiments, the adhesive element 20 may be non-cured droplets of adhesive.

Suitable adhesives for use in the instant disclosure include any adhesive that can be applied to the eyelash filaments 14 and retain stickiness while the lash extension system 10 is stored in packaging. Suitable adhesives can be applied to eyelash filaments 14, then stored without drying.

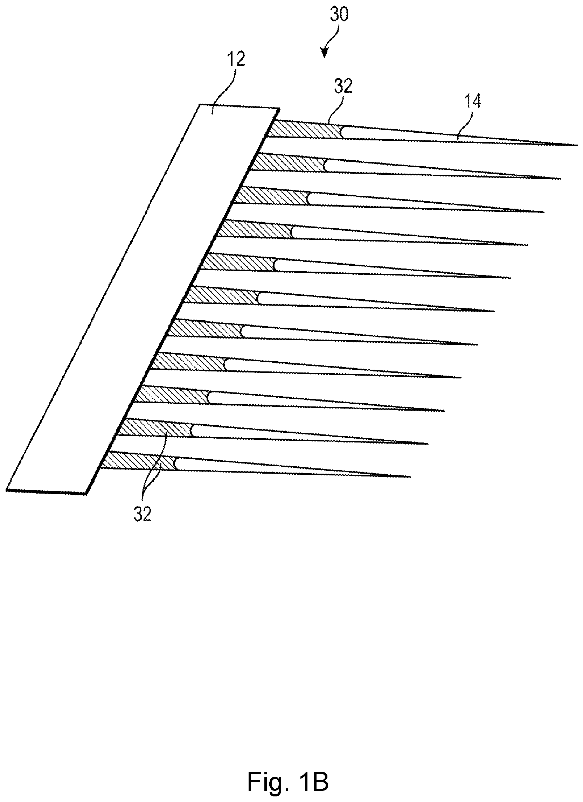

FIG. 1A shows the adhesive element 20 as discrete applications of adhesive on the eyelash filaments 14. An embodiment according to the invention 30 is shown in FIG. 1B. The lash extension system 30 shown in FIG. 1B features adhesive elements 32 extending continuously along the length of the eyelash filaments 14 starting from the support strip 12 to a defined position. In some embodiments, the length along the eyelash filaments 14 covered by the adhesive elements 32 is customized to the weight and other attributes of a lash extension set using the invented system. Preferably, the adhesive elements 32 will extend continuously on the first half to one-third of the average length of the eyelash filaments that extend from the support strip (i.e., the length of the eyelash filament embedded in the support strip is not included in this length). In alternative embodiments, not according to the invention, the adhesive elements 32 are disposed continuously along lengths of the eyelash filaments 14 where the length is not proximate to the support strip (i.e., middle and tip portions of eyelash filaments). Yet, in another non-claimed embodiment, the adhesive elements 32 may be applied continuously from a position between the support strip 12 and one-half of the eyelash filaments' average length. In other non-claimed embodiments, the position is selected up to one-half of the eyelash filaments average length from the support strip 12.

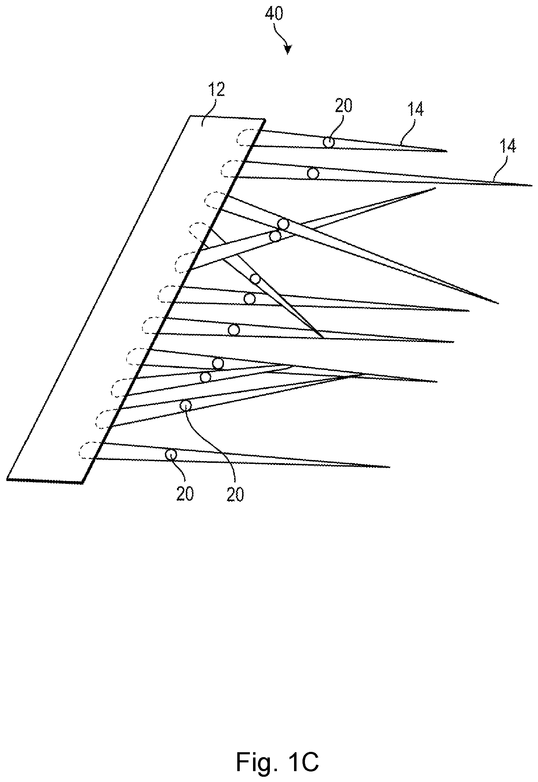

FIGS. 1A and 1B show the eyelash filaments 14 in the same direction and having similar lengths. In alternative embodiments such as the exemplary eyelash extension section 40 shown in FIG. 1C, the eyelash filaments 14 extend in different directions from the support strip 12 and can have different lengths. The eyelash filaments may extend from the support strip 12 such that at least some of the eyelash filaments overlap or cross one another. In one embodiment, the eyelash filaments may extend from the support strip 12 such that at least one-quarter of the eyelash filaments overlap or cross one another. The embodiment shown in FIG. 1C can utilize both the continuous and discrete applications of adhesive elements shown in FIGS. 1A and 1B. For example, the embodiment of FIG. 1C shows the adhesive element 20 much as show in FIG. 1A.

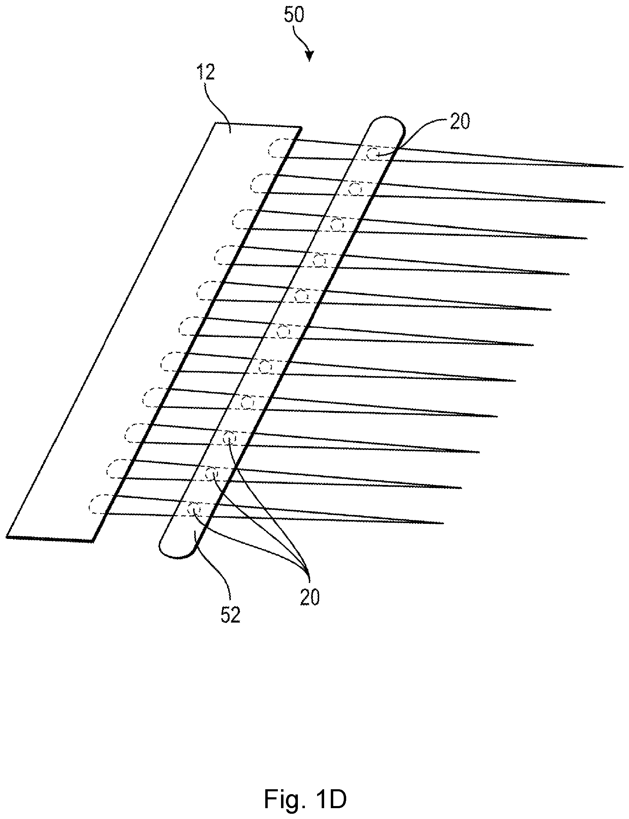

FIG. 1D shows yet another non-claimed embodiment 50 of the invented eyelash extension system. In this embodiment, the adhesive elements 20 (or like adhesive element 32 from FIG. 1B) are overlaid with an elongated substrate 52. The elongated substrate 52 may further include removably overlaying the adhesive elements. The elongated substrate 52 is a thin piece of material that is in removable contact with the adhesive elements 20 disposed on the eyelash filaments 14 extending from the support strip 12. This temporary overlayment of the adhesive elements 20 maintains the cleanliness of the adhesive elements 20 on the lash extension system 50 before a user is ready to apply the eyelash extension system and prevents the system from tangling or getting stuck to undesired surfaces or objects.

In the embodiment depicted in FIG. 1D, the bond between the eyelash filaments 14 and the adhesive elements 20 is stronger than the bond between the adhesive elements 20 and the elongated substrate 52. This relationship of bond strength corresponds with the ability of a user to peel off the elongated substrate 52 from the adhesive elements 20 without removing the adhesive elements 20 from the eyelash filaments 14 or otherwise damaging the lash extension system 50.

In an embodiment, the strength of the adhesion between the adhesive elements 20 and the elongated substrate 52 is tuned by selecting the thickness of an adhesive applied to the surface of the elongated substrate 52 that contacts the adhesive elements 20. Using particular adhesives on the elongated substrate 52, applying a thin layer of adhesive allows for easy removal of the elongated substrate 52 from the adhesive elements 20, while a thicker layer of adhesive will increase the strength of the bond between the elongated substrate 52 and the adhesive elements 20.

In another embodiment, the strength of the adhesion between the adhesive elements 20 and the elongated substrate 52 is tuned by applying a pre-glue (an adhesive that does not completely coalesce during storage of the stored eyelash extension system) to the surface of the elongated substrate 52 that is in contact with the adhesive elements 20.

FIGS. 1A-D show the adhesive elements applied on an upward-facing surface of the eyelash filaments 14 of an eyelash extension system. In these configurations, the invented eyelash extension system is removably attached to the underside of a user's natural lashes. In alternative embodiments, the adhesive elements are disposed on a downward-facing surface of the eyelash filaments 14 of an eyelash extension system. In this alternative embodiment, the eyelash extension system can be removably attached to the top of a user's natural lashes.

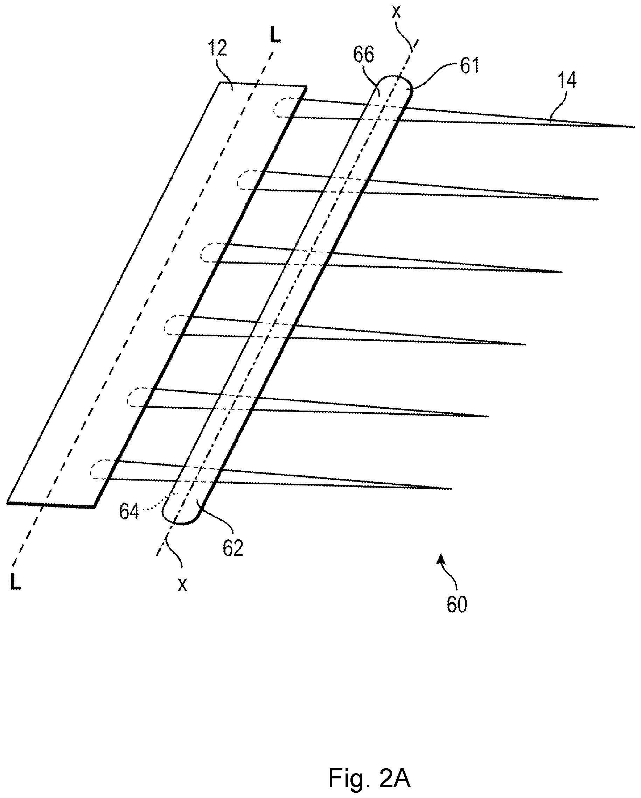

FIG. 2A shows another embodiment 60 of the lash extension system. This embodiment 60 features the same configuration of eyelash filaments 14 and support strip 12 as the embodiment shown in FIG. 1A. In this embodiment, however, the adhesive element 61 in this embodiment 60 is an elongated substrate 62 disposed across the eyelash filaments 14 such that the longitudinal axis x of the elongated substrate 62 is parallel with the length L of the support strip 12. The elongated substrate 62 may also be shorter than the length L of the support strip 12.

As shown in FIG. 2A, the elongated substrate 62 is disposed across the eyelash filaments 14 in a direction perpendicular to the length of the eyelash filaments 14. The adhesive element 61 may comprise an elongated substrate 62 having a longitudinal axis, an upward-facing surface 66, a downward-facing surface 64, and an adhesive disposed on the upward-facing and downward-facing surfaces, wherein the adhesive on the downward-facing surface contacts the eyelash filaments. The adhesive used on the upward-facing and downward-facing surfaces of the elongated substrate may be different. The lash extension system or artificial eyelash extension system may be adapted for the removal of the elongated substrate from the user's eyelashes without removing the elongated substrate from the eyelash filaments. The downward-facing surface 64 of elongated substrate 62 is secured to the eyelash filaments 14. The upward-facing surface 66 of the elongated substrate 62 features an adhesive or other sticky substance disposed thereon.

A person having ordinary skill in the art will readily appreciate that the elongated substrate 62 can be positioned across the eyelash filaments 14 anywhere along their length. Preferably, the elongated substrate 62 is positioned with its centerline (line x in FIG. 2A) disposed on the eyelash filaments 14 at a position corresponding to one-third to one-half of the length of the eyelash filaments 14 extending from the support strip 12. This positioning of the elongated substrate 62 is exemplary and not meant to be limiting. The elongated substrate 62 can reasonably be positioned over any portion of the eyelash filaments 14.

The elongated substrate 62 can be any suitable material for overlaying the eyelash filaments 14 without overly weighing down the lashes and without bending the lashes when worn by a user. Suitable materials for the elongated substrate 62 include double-sided tape and other types of thin strips with adhesives applied to both sides.

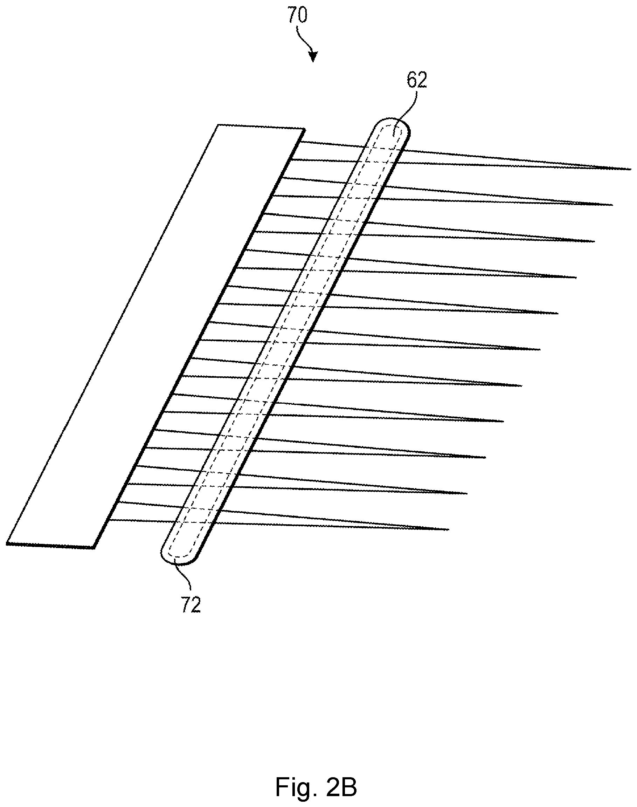

A salient feature of this embodiment is the ability of a user to obtain the eyelash extension system 60 and use it without applying their own adhesives either to the system or their lashes. To enable this feature, the eyelash extension system 60 has to be ready to use when desired by a user. As such, the eyelash extension system 60 should not be stuck to undesired surfaces or objects and should feature clean adhesive disposed on the upward-facing surface 66 of the elongated substrate 62. As shown in FIG. 2B, in order to maintain the eyelash extension system 70 in a ready-to-use configuration, a backing (second elongated substrate) 72 is removably secured to the adhesive distributed over the upward-facing surface 66 of the elongated substrate 62. The system overlaid by the backing 72 is shown in the embodiment 70. This backing 72 is a temporary overlayment on the adhesive on the upward-facing surface of the elongated substrate 62 that prevents the eyelash extension system from sticking to undesired objects or becoming entrained with debris that would undermine the stickiness or appearance of the adhesive.

The backing 72 is double-sided in one embodiment. The backing 72 can be removably secured to the adhesive distributed over the upward-facing surface 66 of the elongated substrate 62, can be made from any material suitable for the temporary overlayment of the adhesive on the elongated substrate 62. Suitable materials include paper, plastic, fiber, and combinations thereof.

In an embodiment featuring the backing 72, the bond between the backing 72 and the first elongated substrate 62 is weaker than the bond between the first elongated substrate 62 and the eyelash filaments 14. This can be accomplished by forming a permanent bond between the first elongated substrate 62 and the eyelash filaments 14 and a temporary one between the backing 72 and the first elongated substrate 62. Alternatively, the adhesive contacting surface of the backing 72 is scored, frosted, or otherwise treated to prevent over sticking. These configurations are exemplary and not meant to be limiting. A person having ordinary skill in the art will understand that any configuration is suitable wherein the second elongated substrate (backing 72) can be removed from overlayment of the first elongated substrate 62 without ripping the first elongated substrate 62 from the eyelash filaments 14.

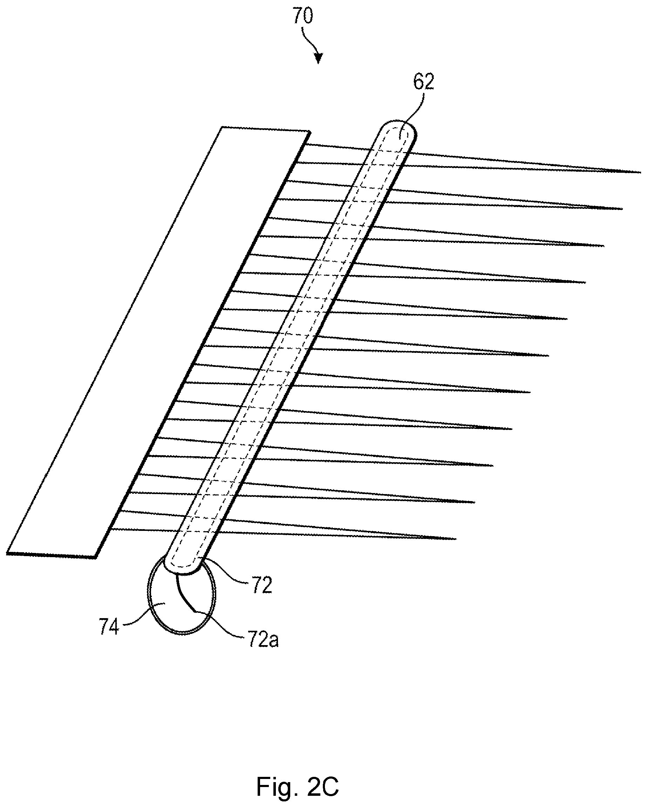

FIG. 2C shows the embodiment 70 of the invented eyelash extension system shown in FIG. 2B with the addition of an element that facilitates the removal of the backing 72 from the elongated substrate 62. As shown in FIG. 2C, the backing 72 can feature a terminating end 72a that extends past the periphery of the lash extension system and defines a tab 74. The tab 74 of the backing 72 can be the same shape as the rest of the backing 72. Alternatively, as shown in FIG. 2C, the tab of the backing 72 can feature a different and larger shape, such as a circular shape that gives a user a larger area to grab. In use, a user can grab the tab 74 and pull it toward the opposing end of the backing 72 to remove the backing 72 from the eyelash extension system.

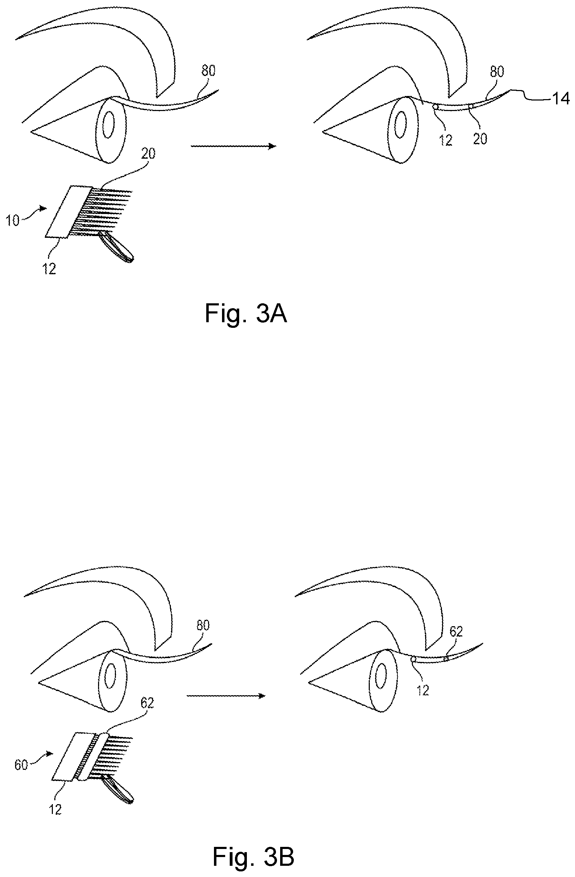

FIG. 3A depicts a schematic of a method of using the embodiment of the disclosure featured in FIG. 1A. The method for applying artificial eyelash extensions may comprise providing to a user an eyelash extension system already having an adhesive element disposed on the eyelash extension system before being packaged for sale to the user and moving the adhesive element of eyelash extension system into contact with the user's natural eyelashes. The step of moving the adhesive element of the extension system into contact with the user's natural eyelashes may comprise contacting an underside of the user's natural eyelashes with the adhesive disposed on the upward-facing surface of the elongated substrate. In the method, the user grasps the tip of eyelash filaments 14 and positions the lash extension system 10 under the user's natural lashes 80 to receive the lash extension system 10. The user's natural lashes 80 are the user's eyelashes in the depicted embodiment. The user then moves the lash extension system 10 upward so that the adhesive elements 20 of the eyelash filaments 14 contact the user's natural lashes 80.

The adhesive elements of the lash extension system can contact any portion of the underside of a user's natural lashes 80. Preferably, the adhesive elements of the lash extension system are put into contact with the user's natural lashes 80 such that the support strip 12 of the lash extension system underlies the underside of a user's natural lashes 80 or their eyelid.

A user applying any of the embodiments of the lash extension system described herein using an eyelash applicator such as the KISS Falscara Eyelash Applicator made by Kiss Products, Inc., located in Port Washington, New York. The Kiss applicator is one suitable eyelash applicator for use with the instant disclosure and is not meant to be limiting. A person having ordinary skill in the art will understand that many false lash applicators are suitable for use with the instant disclosure. Alternatively, a user may use their hand to grasp the invented lash extension system and move it into contact with the user's natural lashes.

A salient feature of the instant disclosure is its ready-to-use nature. Prior art lash systems require applying a bonding solution to the lash extensions and/or the natural lashes of a user before application. The pre-applied adhesive elements are suitable for immediate application to a user's lashes without further preparation of the lash extension system or the user's natural lashes.

After moving the lash extension system into contact with their natural lashes, the invented lash extension system will stay in place without any further pressing using their hand or an applicator. Further, no additional bonding solutions need to be applied. Once the invented lash system is in place, the user can optionally use the applicator or hand to adjust the precise position of the lash extension system or firmly squeeze the adhesive elements and natural lashes together. Surprisingly and unexpectedly, the inventors have discovered that the step of firmly pressing together their natural lashes and adhesive elements from the lash extension system is not necessary as it was in prior art systems. Similarly, the instant disclosure does not require the sandwiching of natural lashes between a lash extension system on the top of the lashes and one on the bottom of the lashes in order to form a lasting bond as is found in the prior art. Another significant feature of the instant disclosure is that the lash extension systems described herein can be applied using only one hand.

### Use of Lash Extensions

FIG. 3A shows a general schematic for using a non-claimed extension system once the adhesive elements are exposed. The embodiment shown in FIG. 1D, for example, first requires the removal of the temporary overlayment of its adhesive elements prior to adhering the lash extension system to the natural lashes of a user. A benefit of the system is that the extension can be worn without the application of additional adhesive.

FIG. 3B shows a schematic of a method of using the embodiment of the lash extension system shown in FIG. 2A depicting the embodiment 60 having a support strip 12, and an elongated substrate 62. Similar to the schematic shown in FIG. 3A, the application of the lash extension system shown in FIG. 2A only requires one step, grasping the end of the eyelash filaments with a hand or applicator and moving the adhesive elements into contact with the desired portion of a user's natural lashes 80.

The adhesive element may further include a second elongated substrate temporarily overlaying the adhesive disposed on the upward-facing surface of the elongated substrate, and wherein that second elongated substrate is removed before moving the adhesive element of the extension system into contact with the user's natural eyelashes. Where the adhesive elements of the lash extension system shown in FIG. 2B are overlaid with a backing (second elongated substrate), the backing is removed prior to application of the lash extension system to a user's natural lashes.

After the application step in FIGS. 3A, and 3B, the user wears the invented lash extension system for a period of up to 24 hours. After wear, the user then grasps the unattached end of the worn lash extension system and gently pulls downward in order to remove the lash extension system from their eyelashes. The lash extension systems can then be stored for reuse. The lash extension systems, once removed, can be reused until their associated adhesive elements wear out. Alternatively, the original adhesive elements of the invented lash extension system can be rejuvenated or removed and replaced with new adhesive elements. Where a user removes the original adhesive elements from the invented lash extension system, the stripped system can then continue to be used as a lash extension system wherein a user applies their own glue.

The figures show the eyelash extension system having a length that approximates the length of a user's eyelid. This is exemplary and not meant to be limiting. In an embodiment, a user will apply only one lash extension system that removably underlies all or substantially all of a user's natural lashes. In such an embodiment, a user needs only apply one eyelash extension system to their natural lashes. In alternative embodiments, the length of the support strips will be shorter and will require a user to apply more than one lash extension system in order to removably underlie all or substantially all their lashes. In yet another embodiment, a user will cut a longer strip of lash extension systems into a plurality of lash extension systems having desired lengths, forming a cluster of lash extension systems.

In one embodiment, the steps of use include applying additional glue, drying, and applying heat. The heat-activated adhesive becomes more pliant when heated. In this embodiment, the users will apply heat by using a heat applicator. In one embodiment, the heat applicator is a small heater included in the package. In another embodiment, the source of heat is a force-activated heat pack. In another embodiment, the heat source comprises a layer of material that heats up when exposed to the electromagnetic radiation found in a microwave oven.

When dried on the lashes, the glue is substantially solid. When heated, the glue changes states to a somewhat liquid or soft - jello-like, jelly-like, or pudding-like state. Such a state and is more comfortable to apply to the natural eyelashes.

Although exemplary implementations of the disclosure have been depicted and described in detail herein, it will be apparent to those skilled in the relevant art that various modifications, additions, substitutions, and the like can be made without departing from the disclosure and these are therefore considered to be within the scope of the invention as defined in the following claims.

## Claims

1. An artificial eyelash extension system (30) comprising:
a plurality of eyelash filaments (14), each having a base (16) and a tip (18);
a support strip (12) attached to the bases of the eyelash filaments; and
an adhesive element (32) applied to the plurality of the eyelash filaments (14) before the artificial eyelash extension system is packaged for sale to a user,
**characterized in that** the adhesive element (32) is applied on an upward-facing surface or downward-facing surface of the eyelash filaments (14), and
wherein the adhesive element (32) extends continuously along the length of the eyelash filaments (14) starting from the support strip (12) to a defined position.

2. The system (30) of claim 1 wherein the adhesive element (32) is applied at a position between the support strip (12) and one-half the eyelash filaments' (14) average length away from the support strip (12).

3. The system (30) of claim 2 wherein the adhesive element (32) comprises an elongated substrate having a longitudinal axis, an upward-facing surface, a downward-facing surface, and an adhesive disposed on the upward-facing and downward-facing surfaces, wherein the adhesive on the downward-facing surface contacts the eyelash filaments (14).

4. The system (30) of claim 3 wherein the adhesive on the upward-facing surface of the elongated substrate is removably overlaid with a second elongated substrate.

5. The system (30) of claim 4 wherein the elongated substrate comprises a double-sided tape.

6. The system (30) of claim 3 wherein the adhesive on the upward-facing and the adhesive on the downward-facing surface of the elongated substrate are different.

7. The system (30) of claim 3 wherein the system is adapted for removal of the elongated substrate from the user's eyelashes without removing the elongated substrate from the eyelash filaments (14).

8. The system (30) of claim 2 wherein the adhesive element (32) is applied to an upward-facing surface of the eyelash filaments (14).

9. The system (30) of claim 1 wherein the adhesive comprises an adhesive that retains its stickiness during storage of the artificial eyelash extension system (30); or wherein the system (30) is adapted to attach to the user's natural eyelashes without application of additional adhesive to said natural eyelashes; or
wherein between one-half and three-fourths of all eyelash filaments (14) comprising
the artificial eyelash extension system (30) receive said adhesive element (32); or
wherein the eyelash filaments (14) extend from the support strip (12) such that at least some of eyelash filaments (14) overlap; or
wherein the eyelash filaments (14) extend from the support strip (12) such that at least one-quarter of the eyelash filaments (14) overlap; or
wherein the eyelash extension system (30) is a wisp, cluster, flare, or individual eyelash extension system (30). system

10. The system (30) of claim 1 further comprising an elongated substrate removably overlaying the adhesive element, (32) and, optionally
wherein the bond between the eyelash filaments (14) and the adhesive element (32) is stronger than the bond between the adhesive element (32) and the elongated substrate.

## Patentansprüche

1. Künstliches Wimpernverlängerungssystem (30), umfassend:
eine Mehrzahl von Wimpernfilamenten (14), die jeweils eine Basis (16) und eine Spitze (18) aufweisen;
einen Trägerstreifen (12), der an den Basen der Wimpernfilamente angebracht ist; und
ein Klebeelement (32), das auf die Mehrzahl der Wimpernfilamente (14) aufgebracht ist, bevor das
künstliche Wimpernverlängerungssystem für den Verkauf an einen Benutzer verpackt wird, **dadurch gekennzeichnet, dass** das Klebeelement (32) auf eine nach oben weisende Oberfläche oder eine nach unten weisende Oberfläche der Wimpernfilamente (14) aufgebracht ist,
und
wobei sich das Klebeelement (32) durchgehend entlang der Länge der Wimpernfilamente (14) vom Trägerstreifen (12) ausgehend bis zu einer definierten Position erstreckt.

2. Das System (30) nach Anspruch 1, wobei das Klebeelement (32) an einer Position zwischen dem Trägerstreifen (12) und der Hälfte der durchschnittlichen Länge der Wimpernfilamente (14) vom Trägerstreifen (12) entfernt aufgebracht ist.

3. Das System (30) nach Anspruch 2, wobei das Klebeelement (32) ein längliches Substrat umfasst, das eine Längsachse, eine nach oben weisende Oberfläche, eine nach unten weisende Oberfläche und einen Klebstoff aufweist, der auf der nach oben weisenden und der nach unten weisenden Oberfläche angeordnet ist, wobei der Klebstoff auf der nach unten weisenden Oberfläche die Wimpernfilamente (14) berührt.

4. Das System (30) nach Anspruch 3, wobei der Klebstoff auf der nach oben weisenden Oberfläche des länglichen Substrats abnehmbar mit einem zweiten länglichen Substrat überdeckt ist.

5. Das System (30) nach Anspruch 4, wobei das längliche Substrat ein doppelseitiges Klebeband umfasst.

6. Das System (30) nach Anspruch 3, wobei der Klebstoff auf der nach oben weisenden Oberfläche und der Klebstoff auf der nach unten weisenden Oberfläche des länglichen Substrats unterschiedlich sind.

7. Das System (30) nach Anspruch 3, wobei das System für die Entfernung des länglichen Substrats von den Wimpern des Benutzers ohne Entfernung des länglichen Substrats von den Wimpernfilamenten (14) ausgebildet ist.

8. Das System (30) nach Anspruch 2, wobei das Klebeelement (32) auf eine nach oben weisende Oberfläche der Wimpernfilamente (14) aufgebracht ist.

9. Das System (30) nach Anspruch 1, wobei der Klebstoff einen Klebstoff umfasst, der seine Klebrigkeit während der Lagerung des künstlichen Wimpernverlängerungssystems (30) beibehält; oder
wobei das System (30)
dazu ausgebildet ist, an den natürlichen Wimpern des Benutzers ohne Aufbringen von zusätzlichem Klebstoff auf besagte natürliche Wimpern anzuhaften; oder
wobei zwischen der Hälfte und drei Vierteln aller Wimpernfilamente (14), die
das künstliche Wimpernverlängerungssystem (30) bilden, besagtes Klebeelement (32) erhalten; oder
wobei sich die Wimpernfilamente (14) so vom Trägerstreifen (12) erstrecken, dass sich mindestens
einige der Wimpernfilamente (14) überlappen; oder
wobei sich die Wimpernfilamente (14) so vom Trägerstreifen (12) erstrecken, dass sich mindestens
ein Viertel der Wimpernfilamente (14) überlappen; oder
wobei das Wimpernverlängerungssystem (30) ein Wisp-, Cluster-, Flare- oder Individual-Wimpernverlängerungssystem (30) ist.

10. Das System (30) nach Anspruch 1, ferner umfassend ein längliches Substrat, welches abnehmbar
das Klebeelement (32) überdeckt, und gegebenenfalls
wobei die Verbindung zwischen den Wimpernfilamenten (14) und dem Klebeelement (32)
stärker ist als die Verbindung zwischen dem Klebeelement (32) und dem länglichen Substrat.

## Revendications

1. Système d'extension de cils artificiels (30), comprenant :
une pluralité de filaments de cils (14), ayant chacun une base (16) et une pointe (18) ;
une bande de support (12) fixée aux bases des filaments de cils ; et
un élément adhésif (32) appliqué sur la pluralité des filaments de cils (14) avant que le
système d'extension de cils artificiels ne soit conditionné en vue de la vente à un utilisateur, **caractérisé en ce que** l'élément adhésif (32) est appliqué sur une surface des filaments de cils (14) tournée vers le haut ou tournée vers le bas,
et
dans lequel l'élément adhésif (32) s'étend de manière continue sur la longueur des filaments de cils (14) depuis la bande de support (12) jusqu'à une position définie.

2. Le système (30) selon la revendication 1, dans lequel l'élément adhésif (32) est appliqué en une position entre la bande de support (12) et la moitié de la longueur moyenne des filaments de cils (14) à partir de la bande de support (12).

3. Le système (30) selon la revendication 2, dans lequel l'élément adhésif (32) comprend un substrat allongé ayant un axe longitudinal, une surface tournée vers le haut, une surface tournée vers le bas et un adhésif disposé sur les surfaces tournées vers le haut et vers le bas, dans lequel l'adhésif sur la surface tournée vers le bas est en contact avec les filaments de cils (14).

4. Le système (30) selon la revendication 3, dans lequel l'adhésif sur la surface du substrat allongé tournée vers le haut est recouvert de manière amovible par un second substrat allongé.

5. Le système (30) selon la revendication 4, dans lequel le substrat allongé comprend un ruban adhésif double face.

6. Le système (30) selon la revendication 3, dans lequel l'adhésif sur la surface du substrat allongé tournée vers le haut et l'adhésif sur la surface du substrat allongé tournée vers le bas sont différents.

7. Le système (30) selon la revendication 3, dans lequel le système est adapté pour permettre de retirer le substrat allongé des cils de l'utilisateur sans retirer le substrat allongé des filaments de cils (14).

8. Le système (30) selon la revendication 2, dans lequel l'élément adhésif (32) est appliqué sur une surface des filaments de cils (14) tournée vers le haut.

9. Le système (30) selon la revendication 1, dans lequel l'adhésif comprend un adhésif qui conserve son pouvoir collant pendant le stockage du système d'extension de cils artificiels (30) ; ou
dans lequel le système (30)
est adapté pour se fixer aux cils naturels de l'utilisateur sans application d'adhésif supplémentaire sur lesdits cils naturels ; ou
dans lequel entre la moitié et les trois quarts de tous les filaments de cils (14) constituant
le système d'extension de cils artificiels (30) reçoivent ledit élément adhésif (32) ; ou
dans lequel les filaments de cils (14) s'étendent depuis la bande de support (12) de telle sorte qu'au moins
certains des filaments de cils (14) se chevauchent ; ou
dans lequel les filaments de cils (14) s'étendent depuis la bande de support (12) de telle sorte qu'au moins
un quart des filaments de cils (14) se chevauchent ; ou
dans lequel le système d'extension de cils (30) est un système
d'extension de cils (30) de type wisp, cluster, flare ou individual.

10. Le système (30) selon la revendication 1, comprenant en outre un substrat allongé recouvrant
de manière amovible l'élément adhésif (32) et, éventuellement,
dans lequel la liaison entre les filaments de cils (14) et l'élément adhésif (32) est
plus forte que la liaison entre l'élément adhésif (32) et le substrat allongé.
